**Europäisches Patentamt**

**European Patent Office**

**Office européen des brevets**

(19)

(11) Veröffentlichungsnummer: **0 103 679**

**B1**

(12) **EUROPÄISCHE PATENTSCHRIFT**

(45) Veröffentlichungstag der Patentschrift:
03.09.86

(21) Anmeldenummer: **83105844.1**

(22) Anmeldetag: **15.06.83**

(51) Int. Cl.⁴: **A 47 C 7/46**

(54) **Rückenlehne für einen Fahrzeugsitz, insbesondere einen Kraftfahrzeugsitz.**

(30) Priorität: **18.06.82 DE 3222951**

(43) Veröffentlichungstag der Anmeldung:
**28.03.84 Patentblatt 84/13**

(45) Bekanntmachung des Hinweises auf die Patenterteilung:
**03.09.86 Patentblatt 86/36**

(84) Benannte Vertragsstaaten:
**DE FR GB IT**

(56) Entgegenhaltungen:
**EP-A-0 046 892**
**DE-B-1 554 084**

(73) Patentinhaber: **KEIPER RECARO GmbH & Co.,**
**Büchelstrasse 54- 58, D-5630 Remscheid 14 (DE)**

(72) Erfinder: **Göldner, Walter, Dipl.- Ing., Fichtenweg**
**7, D-7306 Denkendorf (DE)**

(74) Vertreter: **Patentanwälte Phys. Bartels Dipl.- Ing.**
**Fink Dr.- Ing. Held, Lange Strasse 51, D-7000**
**Stuttgart 1 (DE)**

**Beschreibung**

Die Erfindung betrifft eine Rückenlehne für einen Fahrzeugsitz, insbesondere einen Kraftfahrzeugsitz, deren Polsterträger ein mittels wenigstens eines eine unveränderbare Form aufweisenden Formkörpers einstellbares Längsprofil auf der dem Polster zugekehrten Seite hat (vgl. z.B. DE-B-1 554 084).

Bei den bekannten Rückenlehnen dieser Art liegt der Formkorper austauschbar oder nicht austauschbar zwischen dem Polster und dem Polsterträger. Hier wird er in der gewünschten Lage mittels einer Tasche oder dergleichen gehalten. Mehrere in Richtung vom unteren zum oberen Rand der Rückenlehne nebeneinander vorgesehene Taschen gestatten die Positionierung des Formkörpers in wählbarer Höhe. Nachteilig ist hierbei nicht nur der durch die Taschen bedingte Aufwand und die Schwierigkeit, den Formkörper in die Tasche einzuführen oder ihn aus ihr herauszunehmen. Eine Änderung des Längsprofils des Polsterträgers erfordert auch, sofern sie nicht durch eine Höhenverstellung des Formkörpers erfolgt, Formkörper mit unterschiedlichen Profilen, was ebenfalls aufwendig ist und die Lagerhaltungskosten erhöht. Auch können als Austauschteile mitgelieferte Profile verlorengehen.

Der Erfindung liegt die Aufgabe zugrunde, eine Rückenlehne der eingangs genannten Art zu schaffen, bei der mit geringerem Aufwand das Längsprofil des Polsterträgers entsprechend den Erfordernissen eingestellt werden kann. Diese Aufgabe löst eine Rückenlehne mit den Merkmalen des Anspruches 1.

Da bei der erfindungsgemäßen Rückenlehne mittels eines einzigen Formkörpers zwei unterschiedliche Längsprofile des Polsterträgers eingestellt werden können, erübrigt es sich in vielen Fällen, weitere Formkörper bereitzustellen, was den Aufwand wesentlich vermindert. In der Regel wird es vorteilhaft sein, diesen einzigen Formkörper so auszubilden, daß bei einer Anlage der einen Anlagefläche an der Auflagefläche das Längsprofil des Polsterträgers eine stärkere Auswölbung gegen den Rücken des Sitzbenutzers hat als bei einer Anlage der anderen Anlagefläche. Im letztgenannten Falle erhält man das im Regelfall richtige Längsprofil.

Bei einer bevorzugten Ausführungsform ist das einen Teil des Polsterträgers bildende Trägerelement ein plattenähnlicher Körper, dessen dem Polster zugewandte Stützfläche mit Ausnahme ihres vom Formkörper abgedeckten Bereiches entsprechend dem gewünschten Längsprofil des Polsterträgers profiliert ist. Der vom Posterkörper abgedeckte Bereich ist dabei vorzugsweise als zumindest eine den betreffenden Formkörper aufnehmende Vertiefung ausgebildet. Ist eine solche Vertiefung hinsichtlich ihrer Größe an die Größe des Formkörpers angepaßt, dann bedarf es keiner weiteren Mittel, um den Formkörper in der gewünschten Position zu halten.

Aber auch dann, wenn eine solche Vertiefung so ausgebildet ist, daß sie eine Höhenverstellung des Formkörpers zuläßt, kann der Formkörper mit einfachen Mitteln in der gewünschten Position gehalten werden. Die beiden Anlageflächen des Formkörpers können nämlich Rastelemente aufweisen, welche mit Rastelementen im Bereich der Auflagefläche des Trägerelementes zusammenwirken. Vorzugsweise handelt es sich bei diesen ineinandergreifenden Elementen um in Querrichtung der Rückenlehne verlaufende Leisten und Nuten, da solche Elemente auch dann einfach herzustellen sind, wenn der Formkörper und das Trägerelement aus Kunststoff, insbesondere einen Polystyrol-Hartschaum, bestehen, wie dies bei einer bevorzugten Ausführungsform der Fall ist.

Die Anordnung derartiger Leisten und Nuten ist vorzugsweise so gewählt, daß zumindest bei einer Anlage der einen Anlagefläche an der Auflagefläche die Leisten bei unterschiedlicher Höheneinstellung des Formkörpers in Eingriff mit den Nuten gebracht werden können.

Besonders variabel läßt sich das Längsprofil der Rückenlehne auch ohne Verwendung einer eine Höhenverstellung des Formkörpers zulassenden Vertiefung und ohne daß unterschiedliche Formkörper bereitgehalten werden müßten, gestalten, wenn gemäß einem vorteilhaften Ausführungsbeispiel im Trägerelement zwei im gegenseitigen Abstand übereinander angeordnete und aufeinander ausgerichtete Vertiefungen vorhanden sind, von denen jede zur Aufnahme je eines von zwei gleich ausgebildeten Formkörpern vorgesehen ist. Die Vertiefungen und die in ihrem Umriß dazu passend ausgebildeten Formkörper können in diesem Fall verhältnismäßig schmal sein. Dies bedeutet, daß am Trägerelement vertiefungsfreie Längenbereiche ausreichender Ausdehnung zur Verfügung stehen, in denen eine Traverse oder ein Querholm sich von einem Längsholm zum anderen Längsholm des Polsterträgers erstrecken kann. Bei einem vorteilhaften Ausführungsbeispiel ist zu diesem Zweck im Bereich zwischen den beiden Vertiefungen eine Nut für die Aufnahme der Traverse in das Trägerelement eingearbeitet. Um das Herausnehmen eines betreffenden Formkörpers aus der Vertiefung zu erleichtern, insbesondere, wenn es sich um eine keine Höhenverstellung zulassende Vertiefung handelt, in der der Formkörper passend aufgenommen ist, ist bei einem weiteren Ausführungsbeispiel vorgesehen, daß Grifflöcher in zumindest eine Abstützfläche des Formkörpers eingearbeitet sind.

Im folgenden ist die Erfindung anhand zweier in der Zeichnung dargestellter Ausführungsbeispiele im einzelnen erläutert.
Es zeigen:
Fig. 1 einen unvollständig dargestellten Querschnitt des ersten Ausführungsbeispiels,
Fig. 2 einen Längsschnitt des Trägerelements des ersten Ausführungsbeispiels mit in das Trägerelement in einer ersten Position eingesetztem Formkörper,

Fig. 3 einen Längsschnitt des Trägerelements und des in einer anderen Position eingesetzten Formkörpers des ersten Ausführungsbeispiels,

Fig. 4 eine unvollständig dargestellte Draufsicht auf die dem Polster zugekehrte Seite des Trägerelements des ersten Ausführungsbeispiels,

Fig. 5 eine unvollständig und perspektivisch dargestellte Ansicht des Formkörpers des ersten Ausführungsbeispiels,

Fig. 6 eine Stirnansicht dieses Formkörpers,

Fig. 7 eine Draufsicht auf die eine der beiden dem Polster zukehrbaren Seiten des Formkörpers des ersten Ausführungsbeispiels,

Fig. 8 eine Draufsicht auf die dem Polster zugekehrte Seite des Trägerelements eines zweiten Ausführungebeispiels mit in einer ersten Position in das Trägerelement eingesetzten Formkörpern,

Fig. 9 und 10 Schnitte längs der Linien IX-IX bzw. X-X von Fig. 8,

Fig. 11 eine Stirnansicht eines Formkörpers des zweiten Ausführungsbeispiels und

Fig. 12 einen unvollständig gezeichneten, längsverlaufenden Zentralschnitt des Formkörpers von Fig. 11.

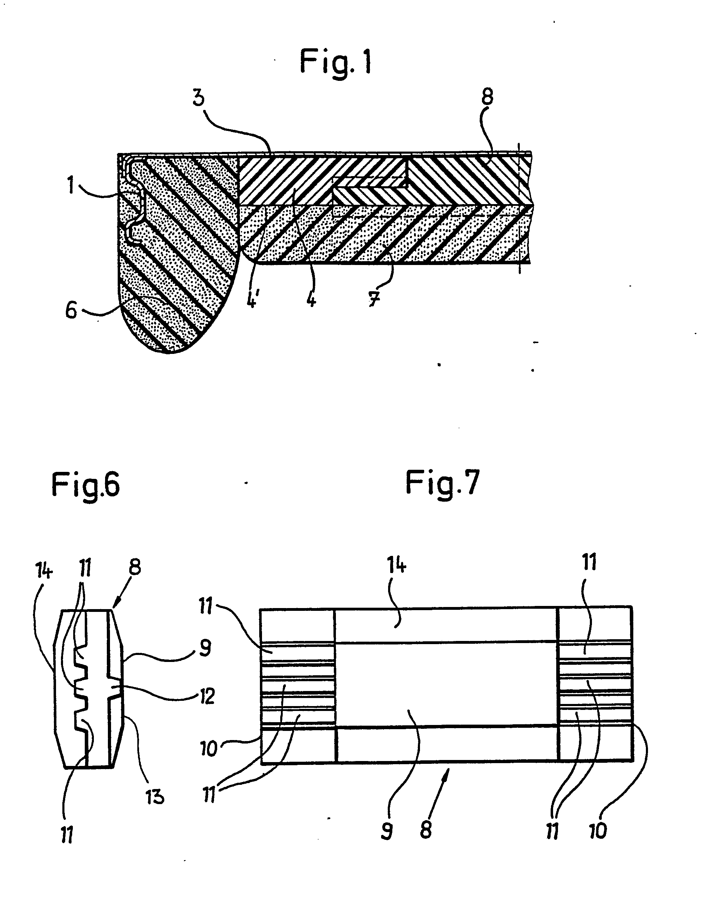

Fig. 1 bis 7 zeigen ein erstes Ausführungsbeispiel einer Rückenlehne für einen Kraftfahrzeugsitz. Diese weist zwei spiegelbildlich gleich ausgebildete Längsholme 1 auf, die im Bereich ihres unteren Endes in bekanter Weise schwenkber mit einem Sitzgestell verbunden sind, um die Rückenlehne in wählbare Neigungslagen einstellen und in diesen Lagen feststellen zu können. Eine nicht dargestellte Traverse erstreckt sich in Querrichtung der Rückenlehne vom oberen Ende des einen Längsholms zum entsprechenden Ende des anderen Längsholms 1. An der Rückseite des aus den beiden Längsholmen 1 und der Traverse gebildeten, rahmenartigen Teils des Polsterträgers der Rückenlehne liegt ein Blech 3 oder eine aus einem anderen Material bestehende Platte an. Die seitlichen Ränder des Bleches 3 sind mit den als metallische Profilschienen ausgebildeten Längsholmen 1 fest verbunden, so daß der Polsterträger die Form einer Schale hat.

Zwischen den beiden Längsholmen 1 ist symmetrisch zu diesen ein Trägerelement 4 angeordnet, das aus Polystyrol-Hartschaum besteht und auf dem Blech 3 festgelegt ist. Das die Form einer rechteckigen Platte aufweisende Trägerelement 4 ist in seiner unteren Hälfte mit einer rechteckförmigen Vertiefung 5 versehen, die sowohl im Abstand vom unteren Rand als auch in gleichen Abständen von den beiden seitlichen Rändern des Trägerelementes endet. Die Vertiefung 5 liegt in dem auf den oberen Beckenrand und die Lendenwirbel ausgerichteten Bereich der Rückenlehne.

Wie Fig. 1 zeigt, weist die Rückenlehne gepolsterte Seitenwangen 6 auf, die vom einen bzw. anderen Längsholm 1 getragen werden und mit ihrer Rückseite am Blech 3 anliegen. Die Breite des Trägerelementes 4 ist, wie Fig. 1 ebenfalls zeigt, so gewählt, daß es den Zwischenraum zwischen den Seitenwangen 6 ausfüllt. Seine dem Rücken des Sitzbenutzers zugekehrte Vorderseite 4' bildet daher die Anlagefläche für den mit einem Bezug versehenen Mittelteil 7 der Lehnenpolsterung, welcher seitlich an die Seitenwangen 6 angrenzt.

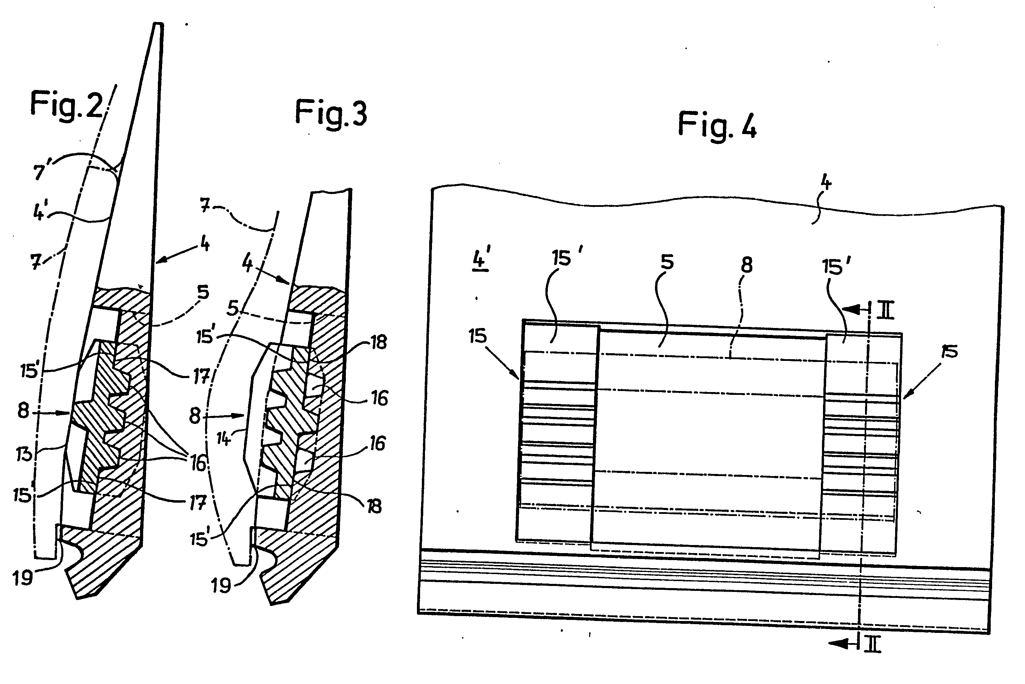

Wie die Fig. 2 und 3 zeigen, hat das Trägerelement 4 ein keilähnliches Längsprofil. Dieses Längsprofil ist so gewählt, daß der Rücken des Sitzbenutzers eine orthopädisch gute Abstützung erfährt und die Rückenlehne die erforderliche Lendenstütze bildet. Um das Längsprofil der Rückenlehne in Höhe der Lendenwirbel und des oberen Beckenrandes verändern und damit an unterschiedliche Personen anpassen zu können, ist ein im Ausführungsbeispiel ebenfalls aus Polystyrol-Hartschaum bestehender Formkörper 8 vorgesehen, der in die Vertiefung 5 eingesetzt wird und in diesem Bereich, d.h. also in Höhe der Lendenwirbel und des oberen Beckenrandes, das Längsprofil der Rückenlehne bestimmt.

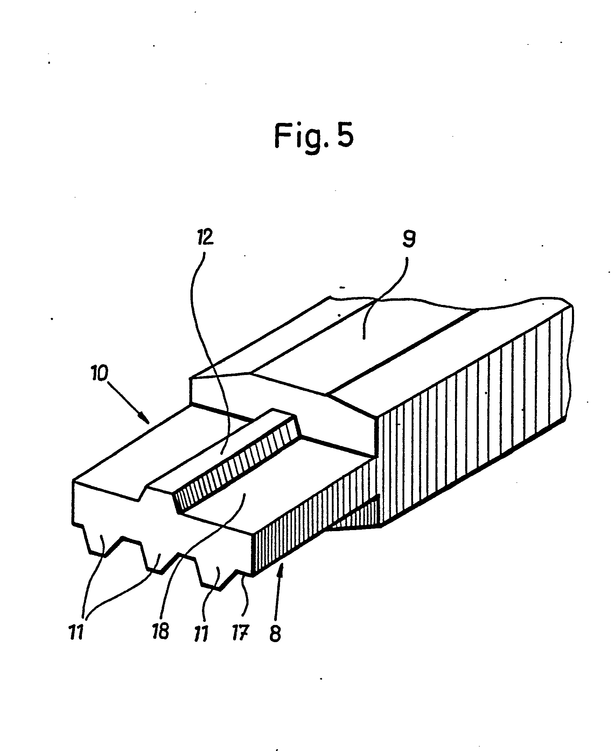

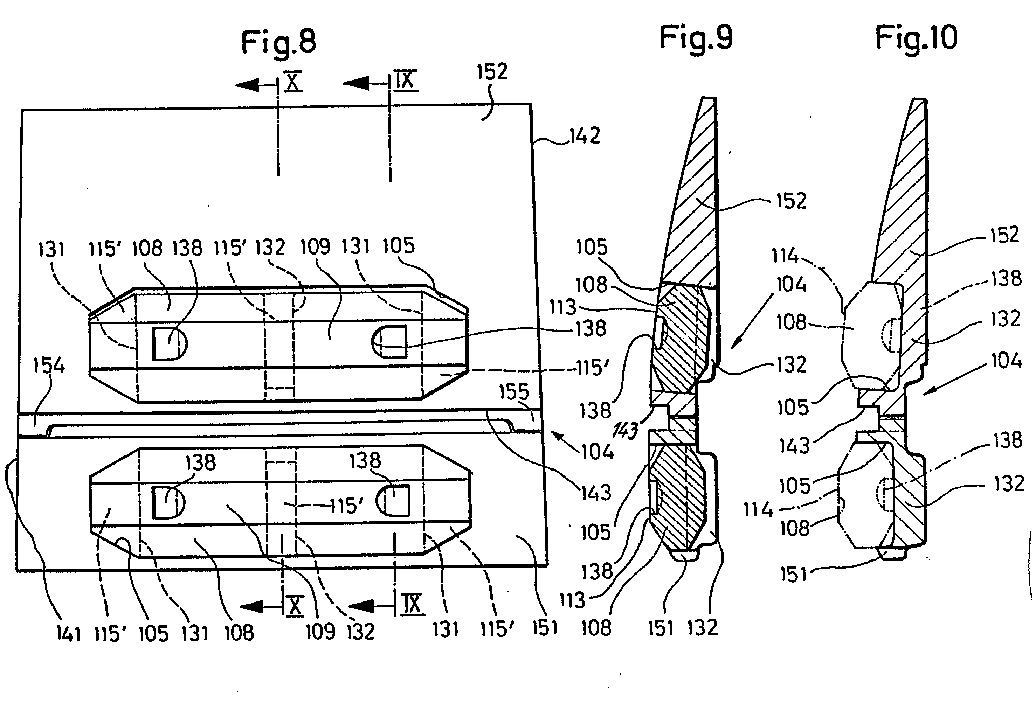

Wie insbesondere die Fig. 5 bis 7 zeigen, weist der Formkörper 8 einen quaderartigen Mittelteil 9 mit einer Querschnittsfläche auf, die aus einem Rechteck und je einem an einander gegenüberliegende Rechteckseiten anschließenden Trapez besteht. An die beiden die gleiche Form aufweisenden Stirnseiten des Mittelteils 9 schließen sich gleich ausgebildete Endabschnitte 10 einstückig an. Diese Endabschnitte 10 haben, wie insbesondere die Fig. 5 und 6 zeigen, die Form einer rechteckförmigen Platte, an deren beide einander gegenüberliegenden großen Seitenflächen Leisten 11 bzw. 12 einstückig angeformt sind. Diese Leisten 11 und 12 haben alle ein gleiches, trapezförmiges Querschnittsprofil und erstrecken sich vom Mittelteil 9 bis zur freiliegenden Stirnfläche des Endabschnittes 10.

Wie insbesondere Fig. 6 zeigt, sind bei dem Formkörper 8 des ersten Ausführungsbeispiels auf der einen Seite drei Leisten 11 in gleichen Abständen nebeneinander vorgesehen, während die andere Seite nur eine einzige Leiste 12 aufweist, welche auf die mittlere der Leisten 11 ausgerichtet ist, allerdings auch eine andere Position haben könnte.

Wie insbesondere Fig. 6 deutlich erkennen läßt, sind die Endabschnitte 10 aus der Mittelebene heraus gegen die eine der beiden Abstützflächen 13 bzw. 14 des Mittelteils 9 hin versetzt, welche je nachdem, wie der Formkörper 8 in die Vertiefung 5 eingesetzt ist, der Anlage des Mittelteils 7 des Polsters dienen. Obwohl die beiden Abstützflächen 13 und 14 die gleiche Form haben und ein schwach trapezförmiges Profil ergeben, ist wegen dieser Versetzung das Längsprofil der Rückenlehne in dem vom Formkörper 8 bestimmten Bereich davon abhängig, ob die Abstützfläche 13 oder die Abstützfläche 14 dem Rücken des Sitzbenutzers zugekehrt ist. Im letztgenannten Falle ist die durch den Formkörper 8 bewirkte Auswölbung des Längsprofils gegen den Rücken des Sitzbenutzers hin deutlich größer als dann, wenn die Abstützfläche 13 dem Rücken des Sitzbenutzers zugewandt ist.

Die Vertiefung 5 ist in ihrem den Mittelteil 9 des Formkörpers 8 aufnehmenden zentralen Bereich als Durchbruch ausgebildet. Dessen Abmessung in Querrichtung der Rückenlehne ist an die entsprechende Abmessung des Mittelteils 9 des Formkörpers 8 angepaßt. Hingegen ist die Abmessung des Durchbruchs in der Höhenerstreckung der Rückenlehne größer als die entsprechende Abmessung des Formkörpers 8, was auch für die beiden Seitenbereiche der Vertiefung 5 gilt, damit der Formkörper 8 in unterschiedlicher Höhe in die Vertiefung 5 eingesetzt werden kann.

Die beiden gleich ausgebildeten Seitenbereiche 15 der Vertiefung 5 sind in ihrer in Querrichtung der Rückenlehne gemessenen Breite an die in dieser Richtung gemessene Breite der Endabschnitte 10 angepaßt. Der Formkörper 8 ist daher gegen eine Verschiebung in Querrichtung der Rückenlehne gesichert, wenn er in die Vertiefung 5 eingreift. Wie insbesondere die Fig. 2 und 3 zeigen, ist die vertieft liegende, dem Rücken des Sitzbenutzers zugekehrte Auflagefläche 15' mit drei Nuten 16 versehen, deren Querschnittsprofil an das Querschnittsprofil der Leisten 11 und 12 angepaßt ist. Außerdem ist der Abstand dieser in Querrichtung der Rückenlehne verlaufenden Nuten 16 entsprechend dem Abstand der Leisten 11 voneinander gewählt. Daher können, wenn die Abstützfläche 13 des Formkörpers 8 dem Rücken des Sitzbenutzers zugekehrt ist, alle Leisten 11 vollständig in die Nuten 16 eingreifen, so daß die die drei Leisten 11 tragende Anlagefläche 17 an der Auflagefläche 15' des Seitenbereichs 15 anliegt. Das Längsprofil der Rückenlehne im Bereich des Trägerelementes 5 hat dann den aus Fig. 2 ersichtlichen Verlauf.

Greifen die Leisten 11 in die Nuten 16 ein, dann kann der Formkörper 8 nur in einer einzigen Höheneinstellung in die Vertiefung 5 eingesetzt werden. Ist hingegen die Abstützfläche 14 dem Rücken des Sitzbenutzers zugekehrt, dann kann die Leiste 12 wahlweise in eine der drei Nuten 16 eingesetzt werden, wobei dann die diese Leiste tragende Anlagefläche 18 an der Auflagefläche 15' anliegt. Dies bedeutet, daß bei der Erzielung einer stärkeren Auswölbung des Längsprofils im Bereich der Lendenwirbel und des oberen Beckenrandes mittels des Formkörpers 8 dessen Höheneinstellung in drei Stufen verändert und damit unterschiedlichen Bedürfnissen angepaßt werden kann.

Selbstverständlich wäre es möglich, durch zusätzliche Nuten 16 auch dann eine Höhenverstellung des Formkörpers 8 zu ermöglichen, wenn die Anlagefläche 17 an der Auflagefläche 15' anliegt. Durch die beim ersten Ausführungsbeispiel gewählte Ausgestaltung kann jedoch in einfacher Weise eine einzige Höheneinstellung für die eine Einsetzlage des Formkörpers definiert werden, auch wenn in der anderen Einsetzlage eine Höhenverstellung möglich ist.

Sofern eine nachträgliche Änderung des Längsprofils der Rückenlehne erwünscht ist, genügt es, die Polsterung der Rückenlehne so auszubilden, daß der Mittelteil 9 jederzeit zumindest so weit vom Polsterträger abgenommen werden kann, daß der Formkörper 8 zugänglich ist. Infolge des Trapezprofils der Leisten 11 und 12 sowie der Nuten 16 läßt sich nämlich eine zuverlässige Verbindung zwischen dem Formkörper 8 und dem Trägerelement 4 ohne zusätzliche Verbindungsmittel erreichen, ohne das Lösen der beiden Teile voneinander schwierig zu gestalten.

Das Polster 7 weist, wie Fig. 2 zeigt, etwas oberhalb des oberen Randes der Vertiefung 5 eine sich quer über die ganze Breite des Polsters erstreckende Knicklinie 7' auf, welche im Ausführungsbeispiel durch eine Quernaht gebildet ist. Von die ser Knicklinie 7' aus bis zum unteren Ende ist das Polster 7 längs seiner beiden seitlichen Ränder nicht mit dem Trägerelement 4 oder dem nicht dargestellten Polsterträger verbunden. >ngegen ist längs des unteren Randes des Polsters 7 ein streifenförmiges Haftverschlußelement 19 befestigt, das zusammen mit einem korrespondierenden Haftverschlußelement, das an der Vorderseite des Trägerelementes 4 befestigt und auf das Haftverschlußelement 19 ausgerichtet ist, eine lösbare Verbindung zwischen dem Polster 7 und dem Trägerelement 4 ergibt. Selbstverständlich könnte statt des Haftverschlußelementes auch ein anderer Verschluß, beispielsweise ein Reißverschluß, vorgesehen werden. Um Zugang zu dem Formkörper 8 zu erhalten, braucht das Polster 7 nur an seinem unteren Rand vom Trägerelement 4 gelöst und dann um die Knicklinie 7' nach vorne und oben geklappt zu werden.

In den Fig. 8 bis 12, anhand deren ein zweites Ausführungsbeispiel der Rückenlehne nachstehend beschrieben ist, sind Teile, die solchen des erstbeschriebenen Ausführungsbeispiels entsprechen, mit demgegenüber um einhundert erhöhten Bezugszahlen bezeichnet. Dabei sind von dem zweiten Ausführungsbeispiel in den Fig. lediglich das Trägerelement 104 mit zugehörigen Formkörpern 108 dargestellt, von denen zwei vorhanden sind, die beide gleich ausgebildet sind. Die in Fig. 8 bis 12 nicht dargestellten Teile des Polsterträgers des zweiten Ausführungsbeispiels der Rückenlehne können in gleicher Weise gestaltet sein wie bei dem erstbeschriebenen Ausführungsbeispiel, also einen Polsterträger in Form einer Schale bilden, die seitliche Längsholme sowie diese verbindende Traversen oder Querholme besitzt. Das Trägerelement 104 und die Formkörper 108 sind, wie beim ersten Ausführungsbeispiel, aus Polystyrol-Hartschaum gefertigt.

Ein erster wesentlicher Unterschied des zweiten Ausführungsbeispiels gegenüber dem ersten Ausführungsbeispiel gemäß Fig. 1 bis 7 besteht darin, daß das Trägerelement 104 zwei je symmetrisch zur Längsmittellinie und in gegenseitigem Abstand voneinander angeordnete Vertiefungen 105 aufweist, die gleich ausgebildet sind und in deren jede je ein Formkörper 108 einsetzbar ist. Die beiden Vertiefungen 105, die auf einem Großteil ihrer Länge das Trägerelement 104 durchgehend durchdringen liegen in dem auf den oberen Beckenrand ausgerichteten und dem sich daran nach oben anschließenden Bereich der Rückenlehne. Die Form der Vertiefungen 105 ist der Form der Umrißfläche der Formkörper 108 angepaßt. Wie aus Fig. 8 zu ersehen ist, ist diese Umrißfläche aus einer zentralen, langgestreckten Rechteckfläche mit beiderseits seitlich daran anschließenden Trapezflächen zusammengesetzt, wobei die längeren, parallelen Seiten der Trapezflächen mit den kurzen Seiten der zentralen Rechteckfläche zusammenfallen. Die Vertiefungen 105 sind, wie bereits erwähnt, nicht auf ihrer ganzen Länge durchgehend ausgebildet, sondern weisen in den seitlichen Endbereichen den Grund der Vertiefung 105 bildende Böden 131 sowie je eine zentrale, am Grund der Vertiefung 105 querverlaufende Rippe 132 auf. Die Umrißfläche der seitlichen Böden 131 entspricht der Trapezfläche der seitlichen Endbereiche der Formkörper 108. Die dem zugeordneten Formkörper 108 zugekehrten Flächen der Böden 131 und der Rippe 132 liegen bei jeder Vertiefung 105 in einer gemeinsamen Ebene und dienen als Auflageflächen 115', an denen sich zugeordnete Anlageflächen des in die betreffende Vertiefung eingesetzten Formkörpers 108 abstützen.

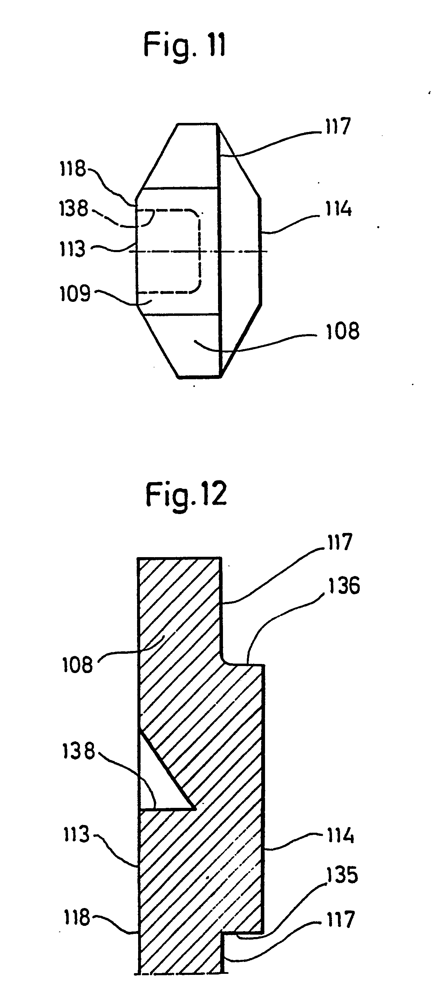

Jeder Formkörper 108 weist, wie insbesondere die Fig. 9 bis 11 zeigen, einen quaderartigen Mittelteil 109 mit einer Querschnittsfläche auf, die aus einem Rechteck und je einem an einander gegenüberliegende Rechteckseiten anschließenden Trapez besteht. Ist der Formkörper 108 in derjenigen Position in die betreffende Vertiefung 105 eingesetzt, daß seine Abstützfläche 113 dem Polster der Rückenlehne zugekehrt ist, so liegt der Formkörper 108 mit Anlageflächen 117 an den Auflageflächen 115' der Vertiefung 105 an. Die Anlageflächen 117 sind durch den Grund einer zentralen, querverlaufenden Nut 135, die in die Abstützfläche 114 des Formkörpers 108 eingearbeitet ist, sowie durch seitliche Ausnehmungen 136 an den Endbereichen des Formkörpers gebildet. Bei eingesetztem Formkörper 108 liegen die Anlageflächen 117 der seitlichen Ausnehmungen 136 an den Auflageflächen 115' der Böden 131 an, und die Anlagefläche 117 der Nut 135 liegt an der Auflagefläche 115' der Rippe 132 an, die in der Nut 135 aufgenommen ist. Ist dagegen der Formkörper 108 in die betreffende Vertiefung 105 in der anderen Position eingesetzt, in der seine Abstützfläche 114 dem Polster der Rückenlehne zugekehrt ist, so liegt die Abstützfläche 113, gleichzeitig als Anlagefläche 118 dienend, an den Anlagefläche 115' der betreffenden Vertiefung 105 an. Wie insbesondere aus den Fig. 11 und 12 zu ersehen ist, ist die Anlagefläche 117 gegenüber der Abstützfläche 114 des Formkörpers 108 nach einwärts versetzt, während die andere Anlagefläche 118 mit der Abstützfläche 113 zusammenfällt. Wegen dieser Versetzung ist das Längsprofil der Rückenlehne in dem vom Formkörper 108 bestimmten Bereich davon abhängig, ob die Abstützfläche 114 oder die Abstützfläche 113 dem Polster der Rückenlehne, d.h. dem Rücken des Sitzbenutzers, zugekehrt ist.

Wenn der Formkörper 108 so in die betreffende Vertiefung 105 eingesetzt ist, daß die Abstützfläche 114 dem Rücken des Sitzbenutzers zugekehrt ist, bereitet das Herausnehmen des Formkörpers 108 keinerlei Schwierigkeiten, weil dieser durch Eingreifen in die zentrale Nut 135 und eine der seitlichen Ausnehmungen 136 bequem ergriffen werden kann. Um die Handhabung ebenso bequem zu gestalten, wenn der Formkörper 108 in der anderen Position eingesetzt ist, wo er mit seiner eine ununterbrochene glatte Oberfläche aufweisenden Abstützfläche 113 dem Benutzer zugekehrt ist, sind in der Abstützfläche 113 zwei Grifflöcher 138 vorgesehen, von denen je eines in der Nähe jedes seitlichen Endbereichs des Formkörpers 108 angeordnet ist.

Ein weiterer wesentlicher Unterschied des Ausführungsbeispiels gemäß Fig. 8 bis 12 gegenüber dem erstbeschriebenen Ausführungsbeispiel besteht darin, daß das Trägerelement 104 in dem Bereich zwischen den beiden Vertiefungen 105 eine querverlaufende, vom einen Seitenrand 141 zum anderen Seitenrand 142 des Trägerelements 104 durchgehende Nut 143 aufweist, die nach vorn, d.h. zu der dem Sitzbenutzer zugekehrten Seite des Trägerelements 104, offen ist. Bei dem hier dargestellten Ausführungsbeispiel ist das Trägerelement 104 zweiteilig ausgebildet und besteht aus einem unteren Trägerteil 151, in dem die untere Vertiefung 105 etwa mittig, bezogen auf die Höhenausdehnung des Trägerteils 151, angeordnet ist, und einem sich an diesen oben anschließenden, oberen Trägerteil 152. Dabei liegen die beiden Trägerteile 151 und 152 im Bereich des Grundes der Nut 143 aneinander an. Wie insbesondere aus Fig. 8 zu erkennen ist, verläuft die Stoßstelle am Grunde der Nut 143 nicht geradlinig, sondern in der Weise, daß der obere Trägerteil 152 in den an die Seitenränder 141 und 142 des Trägerelements 104 angrenzenden Bereichen 154 bzw. 155 den gesamten Grund der Nut 143 bildet, während der untere Trägerteil 151 nur in dem weiter einwärts gelegenen Längenabschnitt der Nut 143 an der Bildung des Grundes oder Bodens der Nut 143 beteiligt ist. Dadurch ergibt sich eine Verzahnung an der Stoßstelle zwischen oberem und unterem Trägerteil 152 bzw. 151, so daß die aneinanderliegenden Trägerteile 151, 152 gegen seitliches Verschieben relativ zueinander gesichert sind. Die Nut 143 ist dazu vorgesehen, um eine die Längsholme 1 (Fig. 1) des Polsterträgers verbindende Traverse oder eine Welle aufzunehmen.

**Patentansprüche**

1. Rückenlehne für einen Fahrzeugsitz, insbesondere einen Kraftfahrzeugsitz, deren Polsterträger (3, 4) ein mittels wenigstens eines eine unveränderbare Form aufweisenden Formkörpers einstellbares Längsprofil auf der dem Sitzbenutzer zugekehrten Seite hat, <u>dadurch gekennzeichnet</u>, daß der Formkörper (8; 108) sowohl auf der dem Polster (7) zugekehrten als auch auf der dem Polster (7) abgekehrten Seite je eine Anlagefläche (17, 18; 117, 118) hat, die wahlweise in definierten positionen des Formkörpers (8; 108) bezüglich des Polsterträgers an Auflageflächen (15; 115) eines Trägerelements (4; 104) anlegbar sind, und daß bei einer Anlage der einen Anlagefläche (17; 117) an die Auflagefläche (15'; 115') des Trägerelements (4; 104) das von der dem Polster (7) zugekehrten Abstützfläche (13, 14; 113, 114) gebildete Längsprofil des Polsterträgers ein anderes ist als bei einer Anlage der anderen Anlagefläche (18; 118) an der Auflagefläche (15'; 115').

2. Rückenlehne nach Anspruch 1, dadurch gekennzeichnet, daß das bei einer Anlage der einen Anlagefläche (18; 118) an die Auflagefläche (15' 115') definierte Längsprofil des Polsterträgers eine stärkere Vorwölbung gegen den Rücken des Sitzbenutzers hat als bei einer Anlage der anderen Anlagefläche (17; 117).

3. Rückenlehne nach Anspruch 1 oder 2, dadurch gekennzeichnet, daß das einen Teil des Polsterträgers bildende Trägerelement (4; 104) ein plattenartiger Körper ist, dessen dem Polster zugewandte Stützfläche mit Ausnahme ihres vom Formkörper (8; 108) abgedeckten Bereichs (5; 105) entsprechend dem gewünschten Längsprofil des Polsterträgers profiliert ist.

4. Rückenlehne nach Anspruch 3, dadurch gekennzeichnet, daß der vom Formkörper (8; 108) abgedeckte Bereich des Trägerelements (4; 104) als zumindest eine den betreffenden Formkörper (8; 108) aufnehmende Vertiefung (5; 105) ausgebildet ist.

5. Rückenlehne nach Anspruch 4, dadurch gekennzeichnet, daß das Trägerelement (104) zwei in der Richtung der Höhenerstreckung der Rückenlehne zueinander versetzt angeordnete, aufeinander ausgerichtete, zumindest im wesentlichen gleich ausgebildete Vertiefungen (105) zur Aufnahme je eines von zwei gleich ausgebildeten Formkörpern (108) aufweist.

6. Rückenlehne nach einem der Ansprüche 1 bis 5, dadurch gekennzeichnet, daß die beiden Anlageflächen (17, 18) jedes Formkörpers (8) im Bereich der beiden seitlichen Endabschnitte (10) desselben vorgesehen sind und Rastelemente (11, 12) aufweisen, welche mit Rastelementen (16) im Bereich der Auflagefläche (15') zusammenwirken.

7. Rückenlehne nach Anspruch 6, dadurch gekennzeichnet, daß die ineinandergreifenden Rastelemente als in Querrichtung der Rückenlehne verlaufende Leisten (11, 12) und Nuten (16) ausgebildet sind, die vorzugsweise ein trapezförmiges Querschnittsprofil haben.

8. Rückenlehne nach Anspruch 7, dadurch gekennzeichnet, daß die Leisten (11, 12) und Nuten (16) zumindest bei einer Anlage der einen Anlagefläche (18) an der Auflagefläche (15') in unterschiedlichen Höheneinstellungen jedes Formkörpers (8) in Eingriff miteinander bringbar sind.

9. Rückenlehne nach einem der Ansprüche 4 bis 8, dadurch gekennzeichnet, daß jede Vertiefung (5) die Form eines sich in Lehnenquerrichtung erstreckenden Rechteckes hat und daß die vertieft liegende Auflagefläche (15') durch die beiden seitlichen Endzonen der Vertiefung (5) gebildet sind.

10. Rückenlehne nach Anspruch 9, dadurch gekennzeichnet, daß der Formkörper (8) eine auf die Form der Vertiefung (5) abgestimmte, rechteckige Kontur hat und die Breite der seitlichen Endabschnitte (10), welche die zurückgesetzten Anlageflächen (17, 18) bilden, an die Breite der Randzonen angepaßt ist.

11. Rückenlehne nach Anspruch 9 oder 10, dadurch gekennzeichnet, daß in jeder der beiden seitlichen Randzonen drei Nuten (16) vorgesehen sind und daß die seitlichen Endabschnitte (10) des Formörpers (8) auf ihrer einen Seite drei Leisten (11) und auf ihrer anderen Seite eine Leiste (12) tragen.

12. Rückenlehne nach Anspruch 5, dadurch gekennzeichnet, daß jede Vertiefung (105) die Form eines sich in Lehnenquerrichtung erstreckenden Rechteckes mit vorzugsweise trapezförmig gestalteten, seitlichen Endzonen besitzt und daß die vertieft liegende Auflagefläche (115') durch den Grund der Vertiefung (105) definierende Böden (131) in den beiden seitlichen Endzonen der Vertiefung (105) sowie durch die in gleicher Ebene dazu liegende Oberfläche einer im Zentralbereich der Vertiefung (105) quer verlaufenden Rippe (132) gebildet ist.

13. Rückenlehne nach Anspruch 12, dadurch gekennzeichnet, daß jeder Formkörper (108) eine zu den beiden Vertiefungen (105) passende Kontur und Größe besitzt, daß die für die Zusammenwirkung mit der Auflagefläche (115') vorgesehene eine Anlagefläche (118) durch die eine Abstützfläche (113) des Formkörpers (108) gebildet ist und daß die andere Anlagefläche (117) des Formkörpers (108) durch den Grund einer zur Aufnahme der Rippe (132) vorgesehenen, in die andere Abstützfläche (114) im Mittelteil (109) des Formkörpers (108) eingearbeitete, querverlaufende Nut (135) sowie durch mit dem Grund der Nut (135) in gemeinsamer Ebene liegende, vertiefte Flächen von Ausnehmungen (136) an den seitlichen Endbereichen des Formkörpers (108) gebildet ist.

14. Rückenlehne nach Anspruch 13, dadurch gekennzeichnet, daß in die als Anlagefläche (118) dienende eine Abstützfläche (113) des Formkörpers (108) Grifflöcher (138) eingearbeitet sind.

15. Rückenlehne nach einem der Ansprüche 1 bis 14, dadurch gekennzeichnet, daß der Formkörper (8; 108) und das Trägerelement (4; 104) aus Kunststoff, vorzugsweise aus Polystyrol-Hartschaum, bestehen.

16. Rückenlehne nach einem der Ansprüche 1 bis 15, dadurch gekennzeichnet, daß das Polster (7) im Bereich des Trägerelements (4; 104) mit diesem oder dem Polsterträger lösbar verbunden ist.

17. Rückenlehne nach Anspruch 16, dadurch gekennzeichnet, daß zur lösbaren Verbindung ein Haftverschlußelement (19) oder ein Reißverschluß vorgesehen ist.

18. Rückenlehne nach Anspruch 17, dadurch gekennzeichnet, daß das Polster (7) seitlich von seinem unteren Rand an bis in eine Höhe oberhalb des oberen Randes des obersten Formkörpers (8; 108) ohne Verbindung mit dem Trägerelement (4; 104) oder dem Polsterträger ist.

19. Rückenlehne nach einem der Ansprüche 16 bis 18, gekennzeichnet durch eine sich quer über das Polster (7) erstreckende Knicklinie (7') des Polsters (7).

20. Rückenlehne nach einem der Ansprüche 1 bis 19, dadurch gekennzeichnet, daß in dem Trägerelement (104) eine von einem Seitenrand (141) zum anderen Seitenrand (142) desselben durchgehend verlaufende Nut (143) mit dem Polster (7) zugekehrter Öffnung vorgesehen ist.

21. Rückenlehne nach den Ansprüchen 5 und 20, dadurch gekennzeichnet, daß die Nut (143) in dem Bereich zwischen den beiden Vertiefungen (105) angeordnet ist.

22. Rückenlehne nach Anspruch 21, dadurch gekennzeichnet, daß das Trägerelement (104) aus einem die eine der beiden Vertiefungen (105) aufweisenden unteren, plattenartigen Trägerteil (151) und einem am oberen Ende desselben anschließenden, die andere Vertiefung (105) aufweisenden oberen Trägerteil (152) gebildet ist.

## Claims

I. Back rest for a vehicle seat, particularly a motor vehicle seat, of which the upholstery carrier (3, 4) has on the side towards the user of the seat a longitudinal profile which is adjustable by means of at least one shaped member (8, 108) which is of invariable form, characterized in that the shaped member (8, 108) has both on the side which is towards the upholstery (7) and also on the side which is remote from the upholstery (7) a bearing surface (17, 18; 117, 118) which can optionally bear in defined positions of the shaped member (8, 108) in respect of the upholstery carrier on support faces (15, 115) of a carrier element (4, 104) and in that when one bearing face (17, 117) is bearing on the support face (15', 115') of the carrier element (4, 104), the longitudinal profile of the upholstery carrier which is formed by the bracing surface (13, 14; 113, 114) which is towards the upholstery (7) is a different one than when the other bearing face (18, 118) is bearing on the supporting face (15', 115').

2. Back rest according to Claim I, characterized in that the longitudinal profile of the upholstery carrier which is defined when one bearing face (18, 118) is bearing on the support face (15', 115') has a more pronounced initial curvature towards the back of the seat user than when the other bearing face (17, 117) is in a bearing situation.

3. Back rest according to Claim 1 or 2, characterized in that the carrier element (4, 104) which forms one part of the upholstery carrier is a panel-like member of which the bracing surface towards the upholstery is profiled in accordance with the desired longitudinal profile of the upholstery carrier with the exception of that area (5, 105) which is masked by the shaped member (8, 108).

4. Back rest according to Claim 3, characterized in that the area of the carrier element (4, 104) which is masked by the shaped member (8, 108) is constructed as a depression (5, 105) which accommodates at least one of the relevant shaped members (8, 108).

5. Back rest according to Claim 4, characterized in that the carrier element (104) comprises, in the direction of the vertical extension of the back rest, two mutually staggered depressions (105) which are orientated towards each other and which are at least substantially identical, each of which is intended to accommodate one of two identically constructed shaped members (108).

6. Back rest according to one of Claims 1 to 5, characterized in that the two bearing faces (17, 18) of each shaped member (108) are provided in the region of the two lateral end portions (10) thereof and have ratchet elements (11, 12) which co-operate with ratchet elements (16) in the region of the support face (15').

7. Back rest according to Claim 6, characterized in that the inter-engaging ratched elements are constructed as strips (11, I2) and grooves (16) which extend in the transverse direction of the backrest and which preferably have a trapezoidal cross-sectional profile.

8. Back rest according to Claim 7, characterized in that the strips (11, 12) and grooves (16) are adapted to be brought into engagement with one another at least when one bearing face (18) is bearing on the support face (15') in different vertical positions of each shaped member (8).

9. Back rest according to one of Claims 4 to 8, characterized in that each depression (5) has the form of a rectangle extending in the transverse direction of the back rest and in that the recessed support face (15') is formed by the two lateral end zones of the depression (5).

10. Back rest according to Claim 9, characterized in that the shaped member (8) has a rectangular contour adapted to the form of the depression (5) and in that the width of the lateral end portions (10) which form the set-back bearing faces (17, 18) are adapted to the width of the marginal zones.

11. Back rest according to Claim 9 or 10, characterized in that there are in each of the two lateral marginal zones three grooves (16) and in that the lateral end portions (10) of the shaped member (8) carry on one side three strips (11) and on the other side one strip (12).

12. Back rest according to Claim 5, characterized in that each depression (105) has the form of a rectangle extending in the transverse direction of the back rest, with preferably trapezoidally-shaped lateral end zones and in that the depressed support face (115') is formed by ends (131) in the two lateral end zones of the depression (105) which define the bottom of the depression (105) and by, lying in the same plane as the latter, the surface of a rib (132) extending transversely in the central zone of the depression (105).

13. Back rest according to Claim 12, characterized in that each shaped member (108) has a contour and size adapted to the two depressions (105) and in that one bearing face (118) provided for co-operation with the support face (115') is formed by one bracing surface (113) of the shaped member (108) while the other bearing face (117) of the shaped member (108) is formed by the bottom of a transversely extending groove (113) machined into the other bracing surface (114) in the middle part (109) of the shaped body (108) and provided to accommodate the rib (132) and by, located in a common plane with the bottom of the groove (103), depressed surfaces of recesses (136) at the lateral end zones of the shaped member (108).

14. Back rest according to Claim 13, characterized in that gripping holes (138) are machined into that bracing face (113) of the shaped body (108) which serves as a bearing face (118).

15. Back rest according to one of Claims 1 to 14, characterized in that the shaped body (8,108) and the carrier element (4, 104) consists of synthetic plastics material, preferably hard polystyrene foam.

16. Back rest according to one of Claims 1 to 15, characterized in that the upholstery is in the region of the carrier element (4, 104) separably connected thereto or to the upholstery carrier.

17. Back rest according to Claim 16, characterized in that an adhesive closure element (19) or a sliding clasp fastener is provided as a means of separable connection.

18. Back rest according to Claim 17, characterized in that the upholstery (7) is not connected to the carrier element (4, 104) or to the upholstery carrier laterally of its bottom end as far as a height above the upper edge of the topmost shaped member (8, 108).

19. Back rest according to one of Claims 16 to 18, characterized by a kink line (7') in the upholstery (7) which extends transversely across the upholstery (7).

20. Back rest according to one of Claims 1 to 9, characterized in that there is provided in the carrier element (104) a groove (103) with an opening facing towards the upholstery (7) and extending from one lateral edge (141) to the other lateral edge (142) thereof.

21. Back rest according to Claims 5 and 20, characterized in that the groove (143) is located in the zone between the two depressions (105).

22. Back rest according to Claim 21, characterized in that the carrier element (104) consists of a lower plate-like carrier part (151) comprising one of the two depressions (105) and an upper carrier part (152) comprising the other depression (105) and adjacent the upper end of the carrier part (151).

## Revendications

Dossier pour un siège de véhicule, notamment un siège de véhicule automobile, dont un support de rembourrage (3, 4) comporte, sur le côté tourné ves l'utilisateur du siège, un profil longitudinal réglable à l'aide d'au moins un corps profilé (8, 108) ayant une forme invariante, caractérisé en ce que le corps profilé (8; 108) comporte, aussi bien du côté tourné vers le rembourrage (7) que du côté opposé au rembourrage (7), respectivement une surface d'application (17, 18; 117, 118), qui vient s'appliquer sélectivement dans des positions définies du corps profilé (8; 108) par rapport au support de rembourrage, contre une surface d'appui respective (15; 115) d'un élément porteur (4; 104) et en ce que, lors d'une application d'une des surfaces d'appui (17; 117) contre la surface d'appui (15'; 115') de l'élément porteur (4; 104), le profil longitudinal du support de rembourrage, formé par la surface de soutien (13, 14; 113, 114) tournée vers le rembourrage (7), est différent du profil établi lors d'une application de l'autre surface d'application (18; 118) contre la surface d'appui (15'; 115').

2. - Dossier selon la revendication 1, caractérisé en ce que le profil longitudinal du support de rembourrage, défini lors d'une application d'une des surfaces d'application (18; 118) contre la surface d'appui (15'; 115') présente une plus forte courbure initiale en direction du dos de l'utilisateur du siège que lors d'une application de l'autre surface d'application (17; 117).

3. - Dossier selon une des revendications 1 ou 2, caractérisé en ce que l'élément porteur (4; 104) formant une partie du support de rembourrage est un corps en forme de plaque dont la surface de soutien tournée vers le rembourrage est profilée, à l'exception de sa zone (5; 105) tournée vers le corps profilé (8; 108), en correspondance au profil longitudinal désiré du support de rembourrage.

4. - Dossier selon la revendication 3, caractérisé en ce que la zone de l'élément porteur (4; 104) qui est recouverte par le corps profilé (8; 108) est agencée sous la forme d'au moins un creux (5; 105) recevant le corps profilé correspondant (8; 108).

5. - Dossier selon la revendication 4, caractérisé en ce que l'élément porteur (104) comporte deux creux (105) ayant un profil identique au moins dans l'essentiel, tourné l'un vers l'autre et décalés mutuellement dans le sens de la hauteur du dossier, pour recevoir chacun un des deux corps profilés (108) de structure identique.

6. - Dossier selon une quelconque des revendications 1 à 5, caractérisé en ce que les deux surfaces d'application (17, 18) de chaque corps profilé (8) sont placées dans la zone des deux parties extrêmes latérales (10) de ce corps et comportent des éléments d'arrêt (11, 12) qui coopèrent avec des éléments d'arrêt (16) prévus dans la zone de la surface d'appui (15').

7. - Dossier selon la revendication 6, caractérisé en ce que les éléments d'arrêt s'accrochant l'un dans l'autre sont agencés sous forme de moulures (11, 12) et de rainures (16) orientées dans une direction transversale du dossier et qui ont avantageusement une section profilée en forme de trapèze.

8. - Dossier selon la revendication 7, caractérisé en ce que les moulures (11, 12) et les rainurés (16) peuvent être mutuellement emboîtées au moins lors d'une application d'une des surfaces d'application (18) contre la surface d'appui (15') à différentes hauteurs de réglage de chaque corps profilé (8).

9. - Dossier selon une quelconque des revendications 4 à 8, caractérisé en ce que chaque creux (5) a la forme d'un rectangle s'étendant dans une direction transversale du dossier et en ce que les surfaces d'appui (15') placées en retrait sont constituées par les zones extrêmes latérales du creux (5).

10. - Dossier selon la revendication 9, caractérisé en ce que le corps profilé (8) a un contour rectangulaire correspondant à la forme du creux (5) et la largeur des parties extrêmes latérales (10) qui constituent les surfaces d'application (17, 18) placées en retrait est adaptée à la largeur des zones marginales.

11. - Dossier selon une des revendications 9 ou 10, caractérisé en ce qu'il est prévu dans chacune des deux zones marginales latérales trois rainures (16) et en ce que les parties extrêmes latérales (10) du corps profilé (8) comportent sur un de leurs côtés trois moulures (11) et sur l'autre côté une moulure (12).

12. - Dossier selon la revendication 5, caractérisé en ce que chaque creux (105) a la forme d'un rectangle s'étendant dans une direction transversale du dossier et comportant des zones extrêmes latérales ayant de préférence une forme de trapèze et en ce que la surface d'appui (115') placée en retrait est constituée par les fonds (131) définissant la base du creux (105), dans les deux zones extrêmes latérales du creux (105) ainsi que par la surface, située dans un même plan, d'une nervure (132) disposée transversalement dans une zone centrale du creux (105).

13. - Dossier selon la revendication 12, caractérisé en ce que chaque corps profilé (108) a un contour et une grandeur correspondant aux deux creux (105), en ce qu'une surface d'application (118) prévue pour coopérer avec la surface d'appui (115') est constituée par une des surfaces de soutien (113) du corps profilé (108) et en ce que l'autre surface d'application (117) du corps profilé (108) est constituée par le fond d'une rainure transversale (135) prévue pour recevoir la nervure (132) et ménagée dans l'autre surface de soutien (114) prévue dans la partie centrale (108) du corps profilé (108) ainsi que par des surfaces, placées en retrait et dans un plan commun avec le fond de la rainure (135), d'évidements (136) ménagés dans les zones extrêmes latérales du corps profilé (108).

14. - Dossier selon la revendication 13, caractérisé en ce que des trous de préhension (138) sont ménagés dans une surface de soutien (113) du corps profilé (108) servant de surface d'appui (118).

15. - Dossier selon une quelconque des revendications 1 à 14, caractérisé en ce que le corps profilé (8; 108) et l'élément porteur (4; 104) sont constitués d'une matière plastique, de préférence d'une mousse dure de polystyrène.

16. - Dossier selon une quelconque des revendications 1 à 15, caractérisé en ce que le rembourrage (7) est relié de façon séparable, dans une zone de l'élément porteur (4; 104) avec celui-ci ou avec le support de rembourrage.

17. - Dossier selon la revendication 16, caractérisé en ce que, pour établir la liaison séparable, il est prévu un élément de fermeture par adhérence (19) ou bien une fermeture à glissière.

18. - Dossier selon la revendication 17, caractérisé en ce que le rembourrage (7) ne présente aucune liaison avec l'élément porteur (4; 104) ou avec le support de rembourrage latéralement depuis son bord inférieur jusqu'à une hauteur placée au-dessus du bord supérieur du corps profilé (8; 108) placé complètement en haut.

19. - Dossier selon une quelconque des revendications 16 à 18, caractérisé en ce qu'il est prévu une ligne de pliage (7') du rembourrage (7) s'étendant transversalement au-dessus du rembourrage (7).

20. - Dossier selon une quelconque des revendications 1 à 19, caractérisé en ce qu'il est prévu dans l'élément porteur (104) une rainure continue (143) s'étendant d'un bord latéral (141) à l'autre bord latéral (142) de celui-ci et ouverte en direction du rembourrage (7).

21. - Dossier selon une des revendications 5 et 20, caractérisé en ce que la rainure (143) est placée dans la zone située entre les deux creux (105).

22. - Dossier selon la revendication 21, caractérisé en ce que l'élément porteur (104) est constitué d'une partie inférieure de support (151) en forme de plaque comportant un des deux creux (105) et d'une partie supérieure de support (152) reliée à l'extrémité supérieure de la première partie et comportant l'autre creux (105).

Fig. 1

Fig. 6

Fig. 7

Fig. 4

Fig. 3

Fig. 2

# Fig. 5

# Fig.8

# Fig.9

# Fig.10

131  115' 108 138 115' 132 109 131 105

152

142

105
108
113
138
115'
138
143

155
104
143

154

138 138

115'

141 115' 105 131 108 109 132 131 115' 151 108 151 132

104

152

114
104
108
132

105
143
114
108
151

152
138
132

104

105

138

132

0 103 679

## Fig. 11

## Fig. 12